# EUROPÄISCHE PATENTANMELDUNG

(11) **EP 1 950 185 A1**
(43) Veröffentlichungstag der Anmeldung: **30.07.2008**
(21) Anmeldenummer: 08001166.1
(22) Anmeldetag: 23.01.2008
(51) Int. Cl.: C03C 3/06, C03C 4/20, C03C 17/02, C03C 27/06

(54) **Schichtmaterial für den Hochtemperatureinsatz**

(30) Priorität: 23.01.2007 DE 102007004243
(71) Anmelder: Schott AG, 55122 Mainz (DE)
(72) Erfinder: Borens, Manfred, 55126 Mainz (DE); von Westernhagen, Karsten, 55270 Essenheim (DE); Merolla, Stefano, 55129 Mainz (DE)
(74) Vertreter: Blumbach - Zinngrebe

(57) **Zusammenfassung**

Um einen Werkstoff für den Einsatz bei hohen Temperaturen von mehreren 100°C bereitzustellen, welcher einfach und schnell herzustellen ist, stellt die Erfindung ein Verbundmaterial mit Schichtaufbau und ein Verfahren zu dessen Herstellung mit folgenden Schritten zur Verfügung:
a) Bereitstellen von zumindest zwei Platten, welche jeweils mindestens eine Hauptausdehnungsfläche aufweisen,
b) Stapeln der Platten derart, daß eine Hauptausdehnungsfläche einer Platte einer Hauptausdehnungsfläche der im Stapel folgenden Platte im wesentlichen gegenüberliegt,
c) Verbinden der gestapelten Platten zu einem Block unter Einsatz einer versinterbaren Masse,
d) Durchführen einer Temperaturbehandlung an dem Block, so daß zumindest ein Sintern der versinterbaren Masse erfolgt und aus dem Block ein fester Verbundkörper entsteht.

## Beschreibung

Die Erfindung betrifft ein Verfahren zum Herstellen eines Verbundkörpers mit Schichtaufbau, einen Verbundkörper mit Schichtaufbau und die Verwendung eines solchen Verbundkörpers.

Im Speziellen betrifft die Erfindung die Verarbeitung von Schmelzen von Glas, Metallen, Halbmetallen und ähnlichen Materialien bei hohen Temperaturen von mehreren 100°C. Die Verarbeitung kann beispielsweise das Herstellen einer Schmelze aus Rohmaterial, bei Glas insbesondere Scherben und/oder Gemenge, sowie Läutern, Homogenisieren und weitere Schritte wie Zuführen zur Formgebung umfassen. Bei allen derartigen Verfahrensschritten werden Öfen und Behälter wie Tiegel, Schmelzwannen, Läuterwannen, Rohrleitungen, Rührer und andere Aggregate eingesetzt, von denen im Betrieb Flächen mit der Schmelze in Berührung kommen.

Von einem Material für derartige Bauteile wird eine hohe mechanische Festigkeit ebenso gefordert wie ein hoher Widerstand gegen einen chemischen Angriff infolge des Kontakts mit der Schmelze, das heißt eine hohe Korrosionsbeständigkeit, damit die Verunreinigung der Schmelze durch den Eintrag von Teilchen des Materials möglichst nicht auftreten.

In DE 102 44 040 der Anmelderin wird für die Glasherstellung ein Sinterquarzgut vorgeschlagen, welches einen Zweischichtaufbau aufweist. Eine äußere Schicht des Materials für den Einsatz im Kontakt mit einer Glasschmelze besteht aus Kieselglaskörnern mit einem Durchmesser unter 40 Mikrometern. Diese kleinen Kieselglaskörner werden eingesetzt, damit im Betrieb bei entsprechend hohen Temperaturen eine möglichst schnelle Entglasung des Kieselglases unter Umwandlung in Cristobalit erfolgt.

Cristobalit ist eine Kristallmodifikation von SiO₂ und bietet den Vorteil höherer Korrosionsbeständigkeit als amorphes Kieselglas. Gemäß DE 102 44 040 ist bei der Herstellung des Materials durch Schlickerguß von Kieselglasteilchen darauf zu achten, daß kein beziehungsweise nur wenig Cristobalit gebildet wird, da sich bei etwa 270°C beta-Cristobalit in alpha-Cristobalit unter Volumenabnahme von mindestens 2 % umwandelt. Diese Volumenänderung wird als das Bauteil zerstörend angesehen.

Gemäß DE 102 44 040 muß der Sintervorgang bei ausreichend niedrigen Temperaturen durchgeführt werden, um eine Kristallisation weitgehend zu vermeiden. Der Sintervorgang ist daher zeitaufwendig.

Zudem ist beim monolithischen Guß, bei dem ein kompletter Block gegossen wird und anschließend über eine sehr lange Zeitdauer getrocknet werden muß, die Gefahr von Trocknungsrissen sehr hoch. Die Risse machen den Block unbrauchbar. Zum Beispiel beträgt die Trocknungszeit bei einem Block von 2 m auf 2 m auf 0,3 m beim monolithischen Guß etwa 8 Wochen, wobei die Ausbeute bei 90 % liegt.

Es ergibt sich daher eine Aufgabe der Erfindung, einen Werkstoff für den Einsatz bei hohen Temperaturen von mehreren 100°C bereitzustellen, welcher einfach und schnell herzustellen ist. Es ist eine weitere Aufgabe der Erfindung, die Ausbeute bei der Herstellung derartiger Werkstoffe zu erhöhen.

Des Weiteren hat sich inzwischen gezeigt, daß ein Bedarf an einem Werkstoff besteht, welcher eine noch bessere Korrosionsbeständigkeit insbesondere gegen den Angriff durch Glasschmelzen aufweist.

Diese Aufgaben werden erfindungsgemäß gelöst mit einem Verfahren und einer Vorrichtung gemäß den unabhängigen Ansprüchen. Vorteilhafte Weiterbildungen sind Gegenstand der jeweils zugeordneten Unteransprüche.

Die Erfindung schafft ein Verfahren zum Herstellen eines Verbundkörpers mit Schichtaufbau, umfassend folgende Schritte:
a) Bereitstellen von zumindest zwei Platten, welche jeweils mindestens eine Hauptausdehnungsfläche aufweisen,
b) Stapeln der Platten derart, daß eine Hauptausdehnungsfläche einer Platte einer Hauptausdehnungsfläche der im Stapel folgenden Platte im wesentlichen gegenüberliegt,
c) Verbinden der gestapelten Platten zu einem Block unter Einsatz einer versinterbaren Masse,
d) Durchführen einer Temperaturbehandlung an dem Block, so daß zumindest ein Sintern der versinterbaren Masse erfolgt und aus dem Block ein fester Verbundkörper entsteht.

Unter dem Begriff "Platte" wird ein Körper verstanden, welcher eine Dicke aufweist, die kleiner als seine Länge beziehungsweise Breite ist. Die Fläche, die durch die Länge und Breite aufgespannt wird, ist die Hauptausdehnungsfläche. Die übrigen Außenflächen des Körpers werden im folgenden auch als Stirnseiten bezeichnet. Eine Platte muß nicht eben sein, sondern lediglich eine Form haben, die das Ausbilden eines Stapels aus mehreren Platten erlaubt.

Die Erfinder haben erkannt, daß der Widerstand gegen Korrosion an freien Gußflächen eines Körpers wie hier der Platten höher ist. In einem Verbundkörper aus mehreren solchen Platten liegt eine Abfolge derartiger, ursprünglich freier Flächen vor. Damit wird erfindungsgemäß die Korrosionsbeständigkeit durch die Ausbildung eines Schichtmaterials aus flächig miteinander verbundenen Platten gegenüber bekannten Werkstoffen erhöht. Überraschenderweise kann ein stabiler Verbund zwischen den einzelnen Schichten und Platten erzeugt werden. Porosität und Belastbarkeit des Materials sind gegenüber einem monolithisch hergestellten Material nicht nachteilig verändert. Dies gilt auch in der Übergangszone zwischen den Platten.

Vorteilhafterweise können die Platten bevorratet werden, so daß das Schichten und Verbinden der Platten dann keinen nennenswert erhöhten Arbeitsaufwand gegenüber dem Herstellen eines monolithischen Blockes bedeutet.

Zudem ist das Rißverhalten von Verbundmaterialien beziehungsweise Blöcken, welche mit dem erfindungsgemäßen Verfahren hergestellt werden, günstiger, denn die Richtung eines Rißfortschritts wird an den Schichtübergängen verändert. Dadurch ist das Risiko von durchgehenden Rissen, die beim Aufheizen derartiger Materialien entstehen können, verringert.

Des Weiteren bietet die Erfindung den Vorteil, daß die Trockenzeit deutlich verkürzt wird. Beispielsweise beträgt die Trockenzeit bei einem Block von 2 m auf 2 m auf 0,3 m statt etwa 8 Wochen beim monolithischen Guß beim erfindungsgemäßen Plattenverfahren nur noch etwa 3 bis 4 Wochen, wobei zudem die Ausbeute auf deutlich über 95 % gesteigert wird.

In dem in Schritt b) gebildeten Stapel können die Platten in direktem Kontakt miteinander stehen. Dann werden die Abmessungen des Zwischenraums zwischen benachbarten Platten durch die Oberflächenbeschaffenheit an den Hauptausdehnungsfllächen bestimmt. Die Platten können in dem Stapel jedoch auch mit einem definierten Abstand voneinander angeordnet werden.

Die Schritte b) und c) können dergestalt gleichzeitig ausgeführt werden, daß zunächst die versinterbare Masse auf eine Platte aufgebracht und dann die nächste Platte mit der versinterbaren Schicht in Kontakt gebracht wird. Dabei wird der Abstand der Platten im Stapel durch die Dicke der Schicht aus versinterbarer Masse definiert.

Die Erfindung stellt mehrere Möglichkeiten zum Verbinden der Platten des Stapels zu einem Block zur Verfügung. In einer vorteilhaften Weiterbildung der Erfindung wird in Schritt c) die versinterbare Masse zur Verbindung der Platten in einen Zwischenraum zwischen zwei im Stapel aufeinander folgenden Platten eingebracht. Dadurch werden die Platten flächig miteinander verklebt.

Zusätzlich oder alternativ sieht die Erfindung vor, daß in Schritt c) die versinterbare Masse zur Verbindung der Platten zumindest auf eine Seite des Stapels der Platten, an welche Platten mit einer Stirnseite stoßen, aufgebracht wird. In dieser Weise werden die Platten an ihren Stirnseiten miteinander verbunden. Geschieht dies an zwei einander gegenüberliegenden Seiten des Plattenstapels ist der Stapel bereits zuverlässig zu einem Block fixiert.

Insbesondere kann der Stapel an allen sechs Außenflächen mit versinterbarer Masse umgeben werden. Der entstehende Block ist dann ein umgossener Stapel und wird auch als umgossener Kern bezeichnet.

Zum Versintern der Masse wird der Block in einer Ausführungsform der Erfindung in Schritt d) in einer Ausführungsform der Erfindung gebrannt. Das Brennen des Block wird vorteilhafterweise bei Temperaturen im Bereich von oberhalb von 1000°C, insbesondere im Bereich von 1050°C bis 1285°C, durchgeführt. Das Versintern der Masse kann in einer weiteren Ausführungsform der Erfindung in Schritt d) auch im Einsatz des Blockes bzw. Verbundmaterials erfolgen. Dabei bildet der Block beziehungsweise das Verbundmaterial im Einsatz zumindest einen Teil einer Vorrichtung, welche bei ihrer bestimmungsgemäßen Nutzung Temperaturen oberhalb von 1000°C, insbesondere oberhalb von 1200°C annimmt.

Dieser Temperaturbereich ist gemäß der Erfindung gerade dann besonders vorteilhaft, wenn die versinterbare Masse Quarzgut umfaßt, denn bei den genannten Temperaturen bilden sich Cristobalit-Kristalle im amorphen Gefüge aus Quarzglas aus.

Überraschenderweise und entgegen den Erwartungen aus der DE 102 44 04 wird das Schichtmaterial durch den Abkühlvorgang nach dem Brennen nicht zerstört, obwohl Cristobalit bereits während des Herstellens des Bauteils entsteht. Damit ermöglicht es die Erfindung, die vorteilhaften Eigenschaften des Cristobalits für eine erhöhte Korrosionsbeständigkeit nutzbar zu machen.

In diesem Zusammenhang wird auf die am selben Tag eingereichte deutsche Patentanmeldung der Anmelderin mit dem Aktenzeichen des Vertreters der Anmelderin 06SGL0183DEP (amtliches Aktenzeichen wird nach Erhalt mitgeteilt) verwiesen, welche das Sintern von Quarzglas zu Formkörpern mit kristallinem SiO₂ betrifft. Die Offenbarung in dieser Anmeldung zur Herstellung und zu den Eigenschaften des entsprechend gesinterten Quarzglases wird hiermit durch Bezugnahme auch zum Gegenstand der vorliegenden Anmeldung gemacht.

In einer bevorzugten Weiterbildung der Erfindung werden die Platten selbst nach einem Verfahren mit folgenden Schritten hergestellt:
aa) Bereitstellen von Quarzglas in Form von im wesentlichen amorphen SiO₂-Körnern, von denen maximal 5 %, bevorzugt maximal 3 %, besonders bevorzugt maximal 2 % einen Durchmesser größer als 15 mm, bevorzugt größer als 10 mm, besonders bevorzugt größer als 6 mm aufweisen,
bb) Zugabe von Wasser zu den Quarzglaskörnern zum Herstellen einer Schlickermasse,
cc) Gießen der Schlickermasse in eine Form, die einen Hohlkörper mit der inversen Gestalt der herzustellenden Platte umfaßt,
dd) Trocknen der Schlickermasse zu einer Platte.

Damit bietet die Erfindung den Vorteil einer besseren Korrosionsbeständigkeit insbesondere gegenüber Glasschmelzen, weil durch die Kristallbildung bereits bei der Herstellung die Umwandlung von amorphem zu kristallinem SiO₂ im späteren Einsatz des Bauteils schneller startet, denn es sind bei der Herstellung bereits Kristallkeime eingebaut worden.

In Schritt cc) kann beispielsweise eine Gipsform verwendet werden. Die Flächen der Form, welche mit dem Formteil in Kontakt kommen, können je nach Anforderungen an die Oberflächengüte des herzustellenden Bauteils bearbeitet werden.

In einer vorteilhaften Weiterbildung des Verfahrens werden die Platten einem Schritt
ee) Vorsintern bei einer Temperatur im Bereich zwischen 500°C und 700°C
unterzogen, um das Gefüge bereits einer ersten Festigung zu unterziehen. Dies kann insbesondere dann angezeigt sein, wenn die Platten bis zur Weiterverarbeitung zu einem Block bevorratet werden sollen. Je nachdem, wie die äußere Form der Platte gestaltet ist und welchen Belastungen, beispielsweise durch ihr Eigengewicht, sie infolgedessen standhalten kann, kann das Vorsintern beispielsweise auch in der Gipsorm erfolgen.

Um das Gefüge vollständig auszubilden werden die Platten nach Schritt cc) und/oder nach Schritt dd) und/oder nach Schritt ee) einem Schritt
ff) Sintern
unterzogen. Insbesondere ist dabei vorgesehen, daß das Sintern in Schritt ff) bei einer Sintertemperatur erfolgt, bei welcher zumindest ein Teil des Quarzglases von der amorphen in eine kristalline Modifikation, insbesondere in beta-Cristobalit, umgewandelt wird. Das Brennen der Platten zum Zweck des Sinterns in Schritt ff) kann auch nach Ausformen aus der Gipsform erfolgen

In einer weiteren vorteilhaften Ausgestaltung der Erfindung ist vorgesehen, daß das Sintern in Schritt ff) bei einer Temperatur von mindestens 1080°C, vorzugsweise von mindestens 1120°C, bevorzugt von mindestens 1140°C, besonders bevorzugt von mindestens 1180 °C durchgeführt wird. Durch die hohe Sintertemperatur gemäß der Erfindung kann die Ofenregelung vereinfacht werden und/oder die Brenndauer gegenüber dem Brennen bei Sintertemperaturen von höchstens 1000°C deutlich verkürzt werden. Zudem erfolgt eine bessere Versinterung der Körner der Schlickermasse, welche eine geringere Restporosität nach dem Brennen, eine höhere Dichte, eine bessere mechanische Stabilität und eine geringere Schwindung aufgrund von Nachsintereffekten beim späteren Einsatz des Bauteils mit sich bringt.

In Abstimmung auf die Abmessungen der Platte beziehungsweise des Verbundkörpers wird in einer bevorzugten Ausgestaltung der Erfindung die maximale Temperatur beim Sintern so gewählt, daß das Bauteil eine homogene innere Struktur durch das Versintern des Quarzglases erhält und gleichzeitig vorteilhafterweise die Kristallbildung in den Außenbereichen im gewünschten Ausmaß erfolgt. Nach Erkenntnissen der Erfinder hat sich beispielsweise eine maximale Temperatur beim Sintern von etwa 1285°C bei einer größten Wandstärke der Platte von kleiner oder gleich etwa 85 mm als geeignet herausgestellt. Bei einer größten Wandstärke der Platte von mehr als etwa 85 mm kann diese Temperatur beispielsweise auf etwa 1250°C gesenkt werden.

In einer Weiterbildung der Erfindung ist vorgesehen, die Platten einem Schritt
gg) Abkühlen auf eine Temperatur unter 300°C, bevorzugt unter 270°C, derart, daß das gebildete kristalline SiO₂ seine Kristallstruktur ändert, ohne daß eine wesentliche Rissbildung in der Platte erfolgt,
auszusetzen. Die Erfindung ermöglicht eine Umwandlung des beim Sintern entstandenen kristallinen SiO₂ beim Abkühlen im wesentlichen ohne Beschädigung der Platte, beispielsweise durch Rissbildung, da der Anteil des beim Sintern entstandenen kristallinen SiO₂ sehr niedrig ist.

Daher bleibt die Phasenumwandlung des Cristoballit aufgrund des erfindungsgemäßen Verfahrens im wesentlichen ohne negative Folgen für das Bauteil.

Insbesondere wird gemäß der Erfindung in Schritt aa) im wesentlichen reines Quarzglas in amorpher Form mit einem Gehalt von mindestens 99,0 Gew.-%, bevorzugt mindestens 99,5 Gew.-%, besonders bevorzugt mindestens 99,9 Gew.-% an SiO₂ eingesetzt. Dieser Schritt ist im Zusammenhang mit einer hohen Sintertemperatur, bei der es schon zur Bildung von Christoballit kommt, zu sehen. Die Christoballit-Bildung kann einen bestimmten Anteil erreichen, ohne dass es zur Rissbildung aufgrund der Änderung der Kristallstruktur beim Abkühlen unter 270°C kommt.

In einer bevorzugten Ausgestaltung der Erfindung ist vorgesehen, daß die Platten, insbesondere die Schlickermasse zur Herstellung der Platten, und die versinterbare Masse zum Verbinden der gestapelten Platten zu einem Block eine im wesentlichen identische Zusammensetzung aufweisen. Dadurch wird ein besonders homogenes Verbundmaterial geschaffen, das eine hohe mechanische Festigkeit und gleichzeitig die hohe Korrosionsbeständigkeit aufgrund der im Verbundmaterial vorliegenden Flächen der Platten aufweist.

Die Erfindung bietet jedoch in einer vorteilhaften Weiterbildung auch die Möglichkeit zur Variation der Wärmeleitfähigkeit, indem zumindest eine Platte, insbesondere die Schlickermasse zur Herstellung der Platte, zumindest ein Metalloxid, insbesondere Eisen- und/oder Manganoxid, umfaßt. Dadurch können Keramikblöcke mit definierter Isolationswirkung hergestellt werden. Die Zugabe von Eisenoxid verbessert dabei die Wärmeleitfähigkeit und senkt entgegen den Erwartungen die Wärmekapazität.

Zum Beispiel kann zumindest eine Kernplatte mit gezielt hoher thermischer Leitfähigkeit mit einer Masse umgeben werden, die einen hohen Emissionskoeffizienten sichert. Solche Platten können schneller auf Temperaturänderungen reagieren. Dies läßt sich insbesondere mit einer Kernplatte mit 2 % Eisenoxidgehalt und einer versinterbaren Masse aus im wesentlichen reinem Quarzglas erzielen. Solche Platten können Tempoeraturänderungen aufgrund von Wärmestrahlung besser tolerieren und sind beispielsweise als Auskleidungsmaterial für Öfen sehr gut geeignet.

Die Erfindung stellt des Weiteren einen Verbundkörper, insbesondere herstellbar oder hergestellt mit einem oben beschriebenen Verfahren bereit, welcher einen Schichtaufbau mit zumindest zwei an ihrer jeweiligen Hauptausdehnungsfläche einander gegenüber positionierten Platten umfaßt. In einer bevorzugten Ausführungsform umfaßt der Verbundkörper mehr als zwei, bevorzugt zwischen zwei und 10 Platten. Eine Plattendicke zwischen 10 Millimetern und 100 Millimetern hat sich für viele Anwendungen als vorteilhafter Wert im Hinblick auf Brenndauer, mechanische Festigkeit, Korrosionsbeständigkeit und Arbeitsaufwand erwiesen. Die Dicke der Platten ist jedoch prinzipiell nicht begrenzt.

Der Verbundkörper weist in einer vorteilhaften Weiterbildung eine Gesamtdicke von bis zu 1000 Millimetern, bevorzugt von bis zu 500 Millimetern, besonders bevorzugt von bis zu 400 Millimetern aufweist. Beispielsweise werden für Blöcke mit einer Gesamtdicke von bis zu 400 Millimetern etwa 3 bis 5 Einzelplatten zusammengefügt.

Insbesondere sieht die Erfindung vor, daß zumindest eine Platte eine Länge von bis zu 2500 Millimetern, insbesondere von bis zu 600 Millimetern aufweist. Zumindest eine Platte weist in einer bevorzugten Ausführungsform der Erfindung eine Breite von bis zu 2000 Millimetern, insbesondere von bis zu 600 Millimetern auf. Platten mit derartigen Abmessungen haben sich als geeignet für ein breites Anwendungsspektrum erwiesen.

Sollen besonders große Blöcke hergestellt werden, können diese gemäß der Erfindung in vorteilhaft einfacher Weise aus kleineren Platten aufgebaut werden. Dabei werden die kleineren Platten schichtweise mit versetzten Stoßfugen zu einem großen Block zusammengefügt. Dieser wird dann versintert.

Für eine besonders hohe Korrosionsbeständigkeit insbesondere gegenüber Glasschmelzen hat es sich als vorteilhaft erwiesen, wenn zumindest eine Platte Sinterquarzgut umfaßt. Insbesondere kann zumindest eine Platte mindestens 99,0 mol.-%, bevorzugt mindestens 99,5 mol.-%, besonders bevorzugt mindestens 99,9 mol.-% an SiO₂ umfassen. Insbesondere zum Einstellen der Wärmeleitfähigkeit sieht die Erfindung vor, daß zumindest eine Platte zumindest ein Metalloxid, beispielsweise Eisen- und/oder Manganoxid, umfaßt.

Ein weiterer Vorteil in der Glasherstellung entsteht, wenn die nicht-glasberührende Seite eines Blockes zum Aufbau eines Schmelzbeckens durch eine Platte mit einem zugesetzten Metalloxid, das nicht in der Glaszusammensetzung enthalten ist, gebildet wird. Schreitet der Verschleiß des Schmelzbeckens durch Glaskorrosion soweit fort, dass diese Platte vom Glas erreicht wird, so reichert sich dieses Metalloxid im Glas an, wo es im Rahmen der ständigen Qualitätskontrolle leicht nachgewiesen wird. Dies ist dann der Hinweis, dass das Schmelzbecken erneuert werden muss. Somit kann ein Schmelzbecken ohne Risiko eines unkontrollierten Auslaufens durch Glaskorrosion betrieben werden.

In einer bevorzugten Ausführungsform der Erfindung sind die Platten durch im wesentlichen reines Sinterquarzgut, welches insbesondere mindestens 99,0 mol.-%, bevorzugt mindestens 99,5 mol.-%, besonders bevorzugt mindestens 99,9 mol.-% an SiO₂ aufweist, miteinander verbunden.

Ferner sieht die Erfindung in einer Weiterbildung vor, daß zumindest eine Platte eine offene Porosität von mehr als 2,5 %, bevorzugt im Bereich zwischen 5 % und 25 %, besonders bevorzugt im Bereich zwischen 8 % und 12 % aufweist. Je höher die offene Porosität gewählt wird, umso leichter können die Platten miteinander verbunden werden,
wobei jedoch die mit höherer Porosität sinkende Korrosionsbeständigkeit berücksichtigt werden muß. Vorteilhafterweise können die Platten zusätzlich oder alternativ dazu jeweils eine unterschiedliche offene Porosität aufweisen, wobei insbesondere die Kernplatten eine höhere offene Porosität aufweisen als die Randplatten des Verbundkörpers.

In einer vorteilhaften Ausführungsform der Erfindung weist zumindest eine Platte eine konturierte Oberfläche, insbesondere mit einer Kontur in Wellenform und/oder mit Rechteck- und/oder Dreiecks- und/oder Trapez-förmigen Nuten, auf. Insbesondere ist vorgesehen, daß die Kernplatten mit einer Oberflächenkontur versehen werden. Auch durch die Konturierung der Oberflächen kann der Verbund der Platten insbesondere durch die erhöhte Kontaktfläche verbessert werden. Die konturierten Oberflächen einander benachbarter Platten sind dabei vorzugsweise korrespondierend zueinander ausgebildet, so daß die Flächen "ineinandergreifen".

Es ist jedoch auch möglich, Platten mit konturierter Oberfläche mit im wesentlichen ebenen Platten zu kombinieren, so daß die Konturierung als Abstandshalter beim Stapeln der Platten wirkt. Dadurch wird ein Stapel mit definierten Abmessungen der Zwischenräume geschaffen. In die Zwischenräume wird dann die versinterbare Masse zum flächigen Verbinden der Platten gegeben.

Wie eingangs bereits erwähnt bietet der Aufbau des erfindungsgemäßen Verbundkörpers als Schichtmaterial den Vorteil, daß der Widerstand gegen Korrosion an freien Gußflächen der Platten höher ist. In dem Verbundkörper aus mehreren solchen Platten liegt eine Abfolge derartiger, ursprünglich freier Flächen vor. Der erfindungsgemäße Verbundkörper weist somit durch die Ausbildung eines Schichtmaterials aus flächig miteinander verbundenen Platten gegenüber einem Monolithen mit gleicher oder im wesentlichen gleicher Zusammensetzung und gleicher Geometrie eine erhöhte Korrosionsbeständigkeit gegen Angriffe einer Glasschmelze auf.

Mit anderen Worten umfasst der Verbundkörper mehrere miteinander verbundene Platten, die vorzugsweise gleiche oder auch abweichende Zusammensetzung haben können, und
wobei der Verbundkörper eine höhere Korrosionsbeständigkeit aufweist, als eine einzelne Platte, welche Abmessungen aufweist, die den Abmessungen des gesamten Verbundkörpers entspricht, und welche die gleiche Zusammensetzung wie eine der Platten des Verbundkörpers aufweist.

Dies gilt im Falle verschiedener Zusammensetzungen der einzelnen Platten des Verbundkörpers sogar dann, wenn der Verbundkörper mit einer einzelnen Platte gleicher Abmessung aus dem Material mit der höchsten Korrosionsbeständigkeit unter allen Materialien der Platten verglichen wird.

Mit anderen Worten, bei unterschiedlicher Zusammensetzung der einzelnen Platten ist die Korrosionsbeständigkeit des Verbundkörpers gegenüber einer Glasschmelze höher als die Korrosionsbeständigkeit eines Monolithen gleicher Geometrie wie die des Verbundkörpers gegenüber dieser Glasschmelze,
wobei der Monolith eine Zusammensetzung wie eine der Platten des Vebundkörpers aufweist, und wobei diese Platte die höchste Korrosionsbeständigkeit unter den Platten des Verbundkörpers aufweist.

Die Erfindung sieht des Weiteren die Verwendung eines oben beschriebenen Verbundkörpers zumindest als Teil eines Tiegels und/oder einer Schmelzwanne und/oder einer Läuterwanne und/oder einer Rohrleitung und/oder eines Rührers und/oder eines Ofens und/oder eines Aggregats zum Einsatz in Kontakt mit einer Schmelze zumindest eines Metalls und/oder Halbmetalls und/oder Halbleiters und/oder Glases vor.

Die Erfindung wird nachfolgend anhand von Ausführungsbeispielen und unter Bezugnahme auf die beigefügten Zeichnungen näher erläutert. Es zeigen:
- Fig. 1: Eine schematische Darstellung des Ablaufs des Verfahrens zum Herstellen des Verbundkörpers,
- Fig. 2: schematische Darstellungen einer Platte (Figur 2A) in perspektivischer Ansicht, eines Blockes gemäß einer ersten Ausführungsform (Figur 2B) im Schnitt und eines Blockes gemäß einer zweiten Ausführungsform (Figur 2C) im Schnitt,
- Fig. 3: eine schematische Darstellung des Ablaufs des Verfahrens zum Herstellen einer Platte,
- Fig. 4: schematische Darstellung eines vergrößerten Ausschnitts X aus einem Formkörpers,
- Fig. 5: Mikroskopaufnahme eines Schliffes aus einem Formkörper mit Cristobalit-Anteil gemäß der Erfindung, und
- Fig. 6: Mikroskopaufnahme eines Schliffes aus einem Formkörper, der bei üblicher Temperaturführung gesintert wurde,
- Fig. 7: fotografische Aufnahme einer Bruchfläche aus einer erfindungsgemäßen Platte.

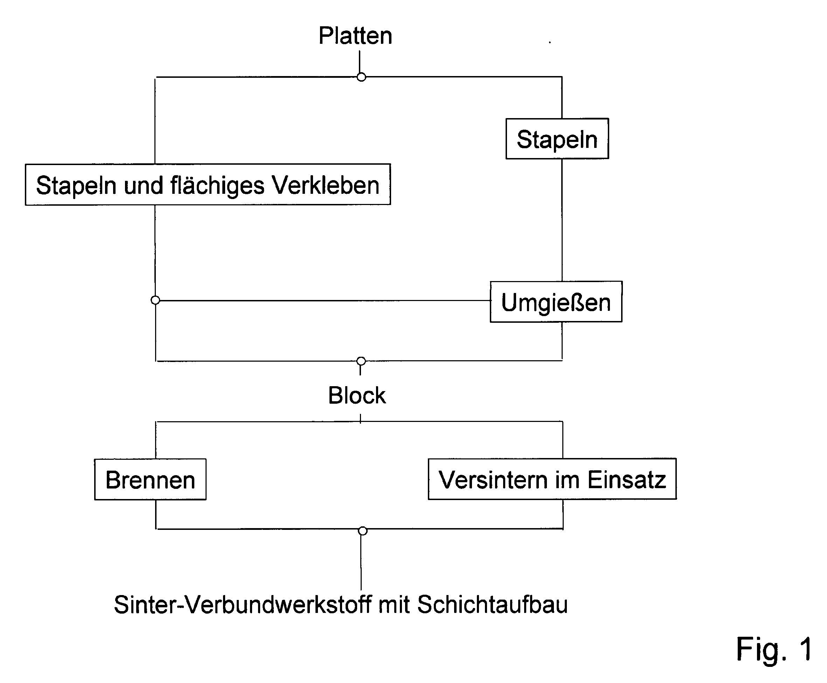

In Figur 1 ist ein Fließbild zum Ablauf des Verfahrens zum Herstellen des Verbundwerkstoffes gezeigt.

In einer Ausführungsform des Verfahrens werden Platten aus Sinterquarzgut mit einer offenen Porosität von mehr als 2,5 %, welche im Schlickergußverfahren hergestellt wurden, nochmals mit der Schlickermasse, die zum Herstellen der Platten diente, zusammengeklebt oder umgossen. Der entstehende Körper wird nochmals gebrannt, wobei typische Brenntemperaturen zwischen 1050°C und 1285°C liegen.

In einer weiteren Ausführungsform der Erfindung wird der Block als durch das Stapeln und flächige Verkleben der Platten entstehende Werkstoffverbund nicht erneut gebrannt. Die Betriebstemperaturen, denen das Material im Einsatz beispielsweise bei der Glasherstellung oder beim Behandeln von Metallschmelzen ausgesetzt ist, sind so hoch, daß die Sinterung während des späteren Einsatzes erfolgt. In der Regel liegt die Einsatztemperatur oberhalb von 1200°C.

Wegen der unterschiedlichen Schrumpfung des Schlickergußmaterials, welches zum Verkleben der Platten benutzt wird, gegenüber den bereits gebrannten Platten empfiehlt es sich, zur Vermeidung von Instabilitäten im fertigen Verbundmaterial die Größe der herzustellenden Bauteile entsprechend gering zu halten. Mit Platten mit einer Kantenlänge von maximal 600 Millimetern haben sich nach Erfahrung der Erfinder keinerlei negative Auswirkungen bemerkbar gemacht. Dies schließt nicht aus, daß auch Platten mit größeren Abmessungen zuverlässig zu handhaben sind.

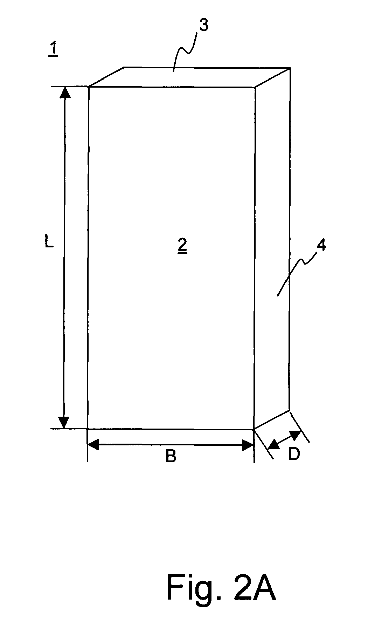

In Figur 2A ist eine Platte schematisch gezeigt. Eine Hauptausdehnungsfläche 2 der Platte 1 ist dem Betrachter zugewandt. Die Platte 2 hat des Weiteren Stirnseiten 3, 4. Die Platte 2 weist eine Länge L, eine Breite B und eine Dicke D auf.

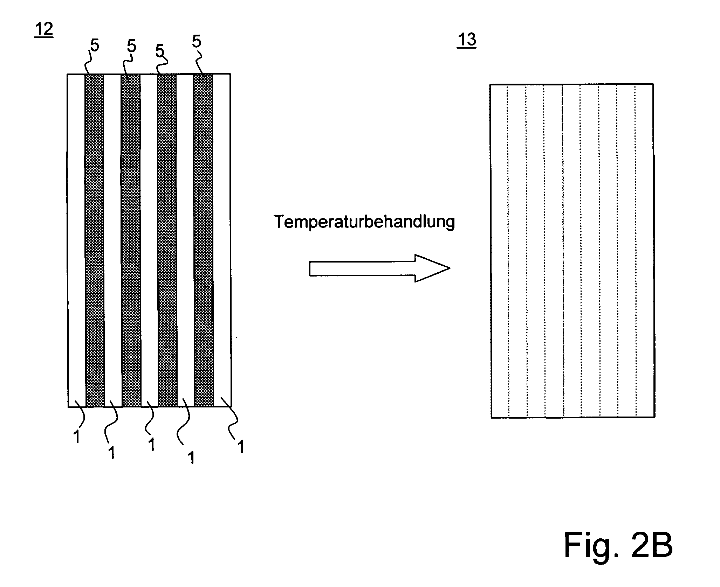

In Figur 2B ist im linken Bild ein Block 12 nach einer ersten Ausführungsform im Schnitt gezeigt. Fünf Platten 1 sind unter Ausbildung von Zwischenräumen in einem Stapel angeordnet. In den Zwischenräumen befindet sich versinterbare Masse 5, so daß die Platten 1 zu einem im wesentlichen kompakten Block 12 zusammengehalten werden. Dieser Block 12 wird einer Temperaturbehandlung unterzogen,
wobei die Masse 5 versintert und so ein Verbundmaterial 13 (rechtes Bild) aus den Platten 1 entsteht, welcher miteinander über die Masse 5 verbunden sind.

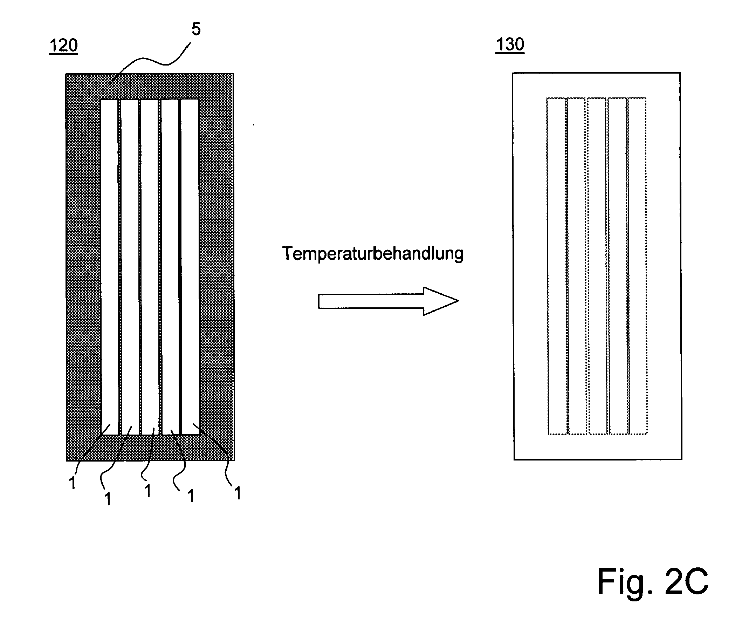

In Figur 2C ist im linken Bild ein Block 120 nach einer zweiten Ausführungsform im Schnitt gezeigt. Auch hier sind fünf Platten 1 in einem Stapel angeordnet. Die Zwischenräume zwischen benachbarten Platten haben eine geringere Weite als im ersten Ausführungsbeispiel. Der Plattenstapel ist mit versinterbarer Masse 5 umgossen, so daß die Platten 1 ebenfalls zu einem im wesentlichen kompakten Block 120 zusammengehalten werden. Dieser Block 120 wird einer Temperaturbehandlung unterzogen, wobei die Masse 5 versintert und so ein Verbundmaterial 130 (rechtes Bild) aus den Platten 1 entsteht, welcher miteinander über die Masse 5 verbunden sind.

Die Spaltweite der Zwischenräume zwischen den Platten liegt in der Regel im Bereich zwischen 10 und 50 Millimeter je nach Plattenformat.

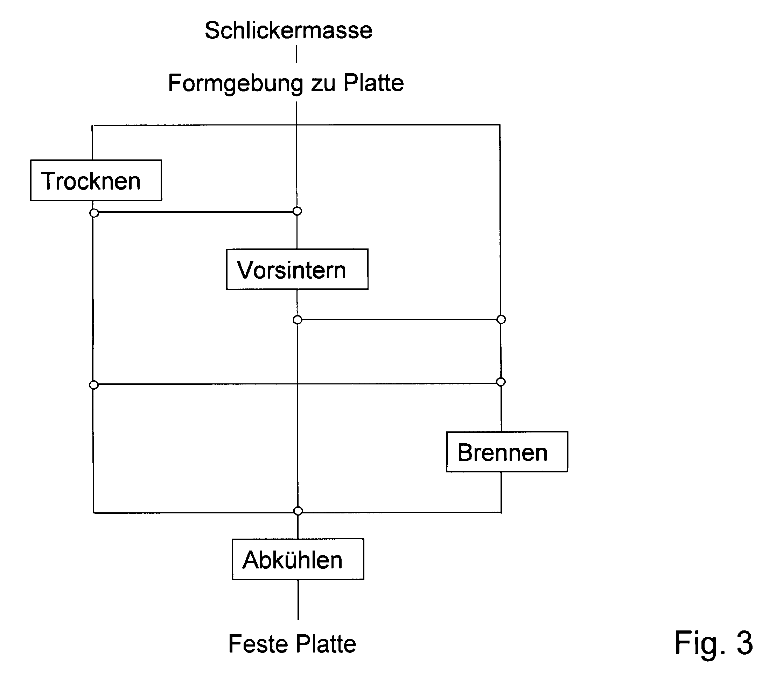

In Figur 3 ist ein Fließbild zum Ablauf des Verfahrens zum Herstellen der Platten gezeigt. Eine Möglichkeit besteht darin, Schlickermasse zu Platten zu formen, die gebrannt werden. Vor dem Brennen können die Platten getrocknet werden. Zusätzlich oder alternativ zum Trocknen können die Platten vor dem Brennen vorgesintert werden.

In einer weiteren Ausführungsform des Verfahrens werden die Platten nach dem Schlickerguß nur getrocknet, also nicht versintert, und dann mit Schlickermasse verklebt beziehungsweise umgossen. Danach wird der Block bei einer Temperatur von 1100°C bis 1200°C, maximal von 1285°C gebrannt. Es können so Platten mit Längen bis 2500 Millimeter und Breiten bis 2000 Millimeter hergestellt werden.

In einer weiteren Ausführungsform der Erfindung werden die Platten nach dem Schlickerguß bei 500°C bis 700°C vorgesintert und dann zu einem Stapel zusammengefügt und verklebt. Danach erfolgt das Brennen.

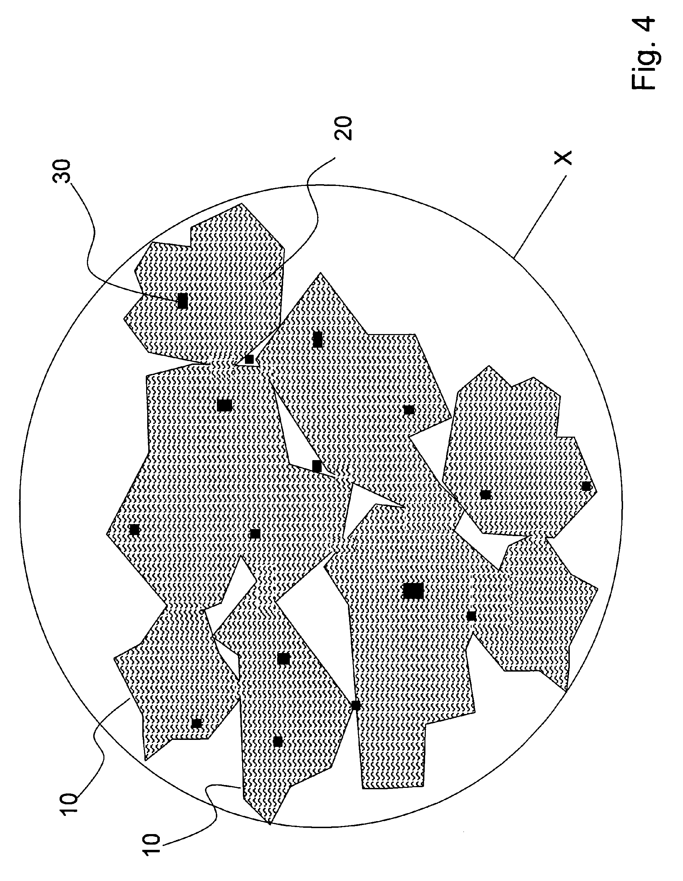

In Figur 4 ist ein vergrößerter Ausschnitt X aus einem gemäß der Erfindung entstehenden Gefüge schematisch dargestellt. Ein derartiges Gefüge kann sowohl eine Platte als auch die versinterte Masse zum Verbinden der Platten, also auch das Verbundmaterial an sich aufweisen. Im gezeigten Beispiel wurde für die Platten und für die versinterbare Masse SiO₂ eingesetzt. Körner 10 sind über Sinterbrücken miteinander zu einem stabilen Festkörper verbunden. Die Körner umfassen amorphes Quarzglas 20. In das Gefüge sind SiO₂-Kristalle 30 eingebettet. Diese können im Innern eines Korns vorliegen und/oder an Stellen, an denen Körner aneinanderstoßen und/oder in Randbereichen der Körner, die in Hohlräume des Gefüges übergehen.

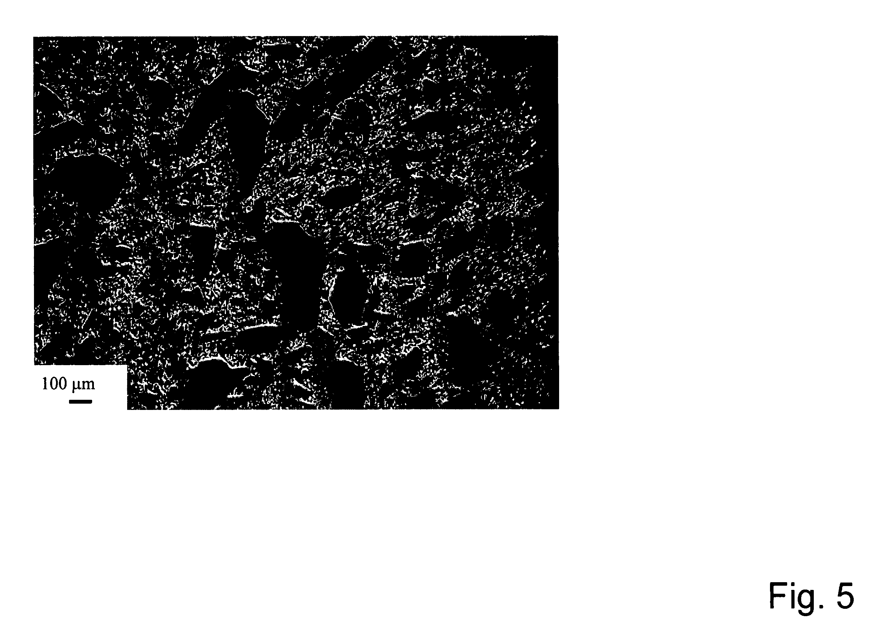

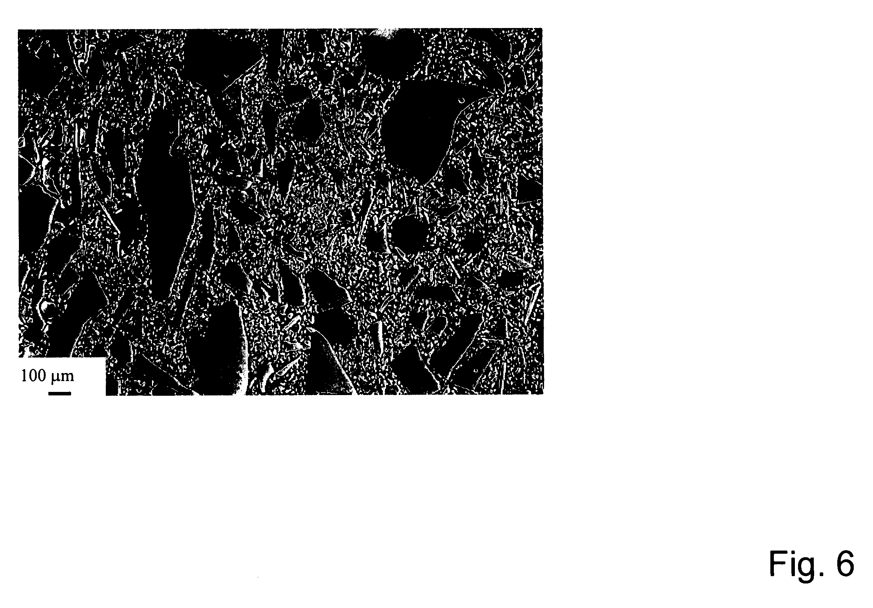

In Figur 5 ist die Mikrostruktur eines Gefüges nach der Sinterung im Temperaturbereich mit beginnender Christobalitbildung im Schliffbild dargestellt. Die Rohdichte des Materials beträgt 1,95 g/cm³; seine offene Porosität liegt bei 11,0 %. Der Christobalitanteil selbst lässt sich dabei im Schliffbild optisch nicht herausarbeiten. Zum Vergleich ist in Figur 6 die Mikrostruktur eines Gefüges im Schliffbild gezeigt, wobei das Gefüge nach Standardsinterung hergestellt wurde. Die Rohdichte dieses Materials beträgt 1,84 g/cm³; seine offene Porosität liegt bei 13,3 %.

Die Platten beziehungsweise das Verbundmaterial weisen eine bessere Korrosionsbeständigkeit gegenüber Glasschmelzen auf. Insbesondere bei Einsatz von SiO2 startet die erste Bildung von Cristobalit, welcher die Korrosionsbeständigkeit zusätzlich zu den Wirkungen des Schichtaufbaus noch weiter verbessert, schon bei der Herstellung, so daß die Umwandlung im späteren Einsatz schneller startet.

Zur Bestimmung der Korrosionsbeständigkeit wurde folgender Korrosionstest gegenüber Borosilikatglas 3.3 gemäß ISO 3585 und EN 1595 durchgeführt. Es wurde Glas mit folgender Zusammensetzung verwendet:

| | |
|---|---|
| 81 % | Kieselsäure (SiO₂), |
| 13 % | Borsäure (B₂O₃), |
| 4 % | Alkalien (Na₂O; K2O) und |
| 2 % | andere Bestandteile (zum Beispiel Al₂O₃). |

In einem statischen Korrosionstest werden Materialproben einer erfindungsgemäßen Platte in die Glasschmelze eingehängt. Dabei werden weder die Glasschmelze noch die Materialprobe bewegt. Die Versuchsdauer beträgt 168 Stunden bei einer Versuchstemperatur von 1400°C. Nach Ablauf der Versuchsdauer wird der Abtrag von der Oberfläche der Materialproben gegenüber den Abmessungen der Probe zu Beginn des Versuchs gemessen.

An einer Probe mit einem Anteil an kristallinem SiO₂ ist der Abtrag dabei geringer als bei einer Probe aus herkömmlichen Material, das zu Beginn des Versuchs keinen Anteil an kristallinem SiO₂ aufweist. Bei der Temperatur von 1400°C liegt das kristalline in Form von Cristobalit vor.

An einer cristobalithaltigen Probe beträgt der Abtrag im Mittel 0,77 mm, im einzelnen wurden Werte zwischen 0,71 mm und 0,82 mm gemessen. Der Abtrag an einer Vergleichsprobe ohne Cristobalitanteil beim Start des Versuchs beträgt im Mittel 1,05 mm, im einzelnen wurden Werte zwischen 1,0 mm und 1,1 mm gemessen.

Bei der Temperatur von 1400°C bildet sich auch in der Vergleichsprobe Cristobalit. Die Probe des erfindungsgemäßen Materials weist jedoch schon unmittelbar zu Beginn des Versuchs einen Cristobalitanteil an der Oberfläche auf. Am Ende des Versuchs ist das Material beider Proben nahezu vollständig in Cristobalit umgewandelt, der Restglasgehalt beträgt weniger als 10 %.

Außer der erhöhten Korrosionsbeständigkeit ist durch die Erfindung auch der Herstellungsprozeß vereinfacht, da eine höhere Sintertemperatur genutzt werden kann. Da die Brenntemperatur bei der Herstellung der Bauteile erhöht und somit eine bessere Versinterung erzielt wird, werden die Restporosität vermindert und die Dichte sowie die mechanische Stabilität der Bauteile erhöht.

Zudem ist die Schwindung aufgrund von Nachsintereffekten im späteren Einsatz geringer. Liegen die Einsatztemperaturen über den Brenntemperaturen, so kann das Material aufgrund des weitergehenden Sinterprozesses schwinden. Da gemäß der Erfindung bereits durch den Herstellungsprozeß alleine eine höhere Rohdichte beziehungsweise geringere Restporosität des Materials erreicht wird, ist diese Schwindung gegenüber bekannten Materialien bei dem erfindungsgemäßen Material deutlich vermindert.

Die Schwindung eines Materials, welches unter Einsatz von SiO₂ hergestellt wurde, liegt im späteren Einsatz für ein Material mit einer Sinterung ohne beginnende Cristobalitbildung im Bereich von 2,0 % bis 4 %. Die Schwindung ist sehr stark beeinflusst von der Korngrößenverteilung des Ausgangsmaterials zur Herstellung des Schlickers und von der Brenntemperatur. Wird die Brenntemperatur -wie oben beschrieben- so hoch gewählt, dass der Bereich der Christoballit-Bildung erreicht wird, lässt sich die Schwindung auf 1,0 bis 2,0 % reduzieren.

### Beispiel für ein Material mit folgender Korngrößenverteilung des Ausgangsrohstoffes:

| Anteil [Gew-%] | Korngröße |
|---|---|
| | |
| 40 bis 60 | kleiner als 0,3 mm |
| 20 bis 30 | 0,3 mm bis 1,0 mm |
| 20 bis 30 | 1,0 mm bis 6,0 mm |

Bei einem normalen Sintern ohne Erreichen der Cristobalit-Bildungszone liegt die Schwindung im Mittel zwischen 2,5 % und 3 %. Durch ein Sintern mit beginnender Christobalitbildung lässt sich die Schwindung auf weniger als 1,5 % (zum Beispiel auf 1,0 bis 1,5%) reduzieren.

Die dichtere Versinterung führt auch zu einer höheren mechanischen Festigkeit des Materials und zu einer besseren Wärmeleitfähigkeit. Für ein Material mit oben genannter Korngrößenverteilung im Ausgangsrohstoff ergeben sich folgende Werte:

| | Material ohne Christobalit | versintert mit beginnender Christobalitbildung |
|---|---|---|
| Elastizitätsmodul (Raumtemperatur) [GPa] | 18 | 30 |
| Elastizitätsmodul (bei 900°C) [GPa] | 26 | 47 |
| Heißbiegefestigkeit (900°C) [MPa] | 20 | 46 |
| Wärmeleitfähigkeit [W/mK] bei 150°C | 1,04 | 1,4 |
| Wärmeleitfähigkeit [W/mK] bei 550°C | 1,24 | 1,6 |
| Dichte [kg/m³] | 1960 | 2015 |
| Kaltbiegefestigkeit (Raumtemperatur) [MPa] | 14 | 23 |

Es handelt sich um Durchschnittswerte aus mehreren Untersuchungen. Einzelwerte können davon abweichen. Die Dicke des Körpers, aus dem die Proben herausgearbeitet wurden, betrug 40 mm.

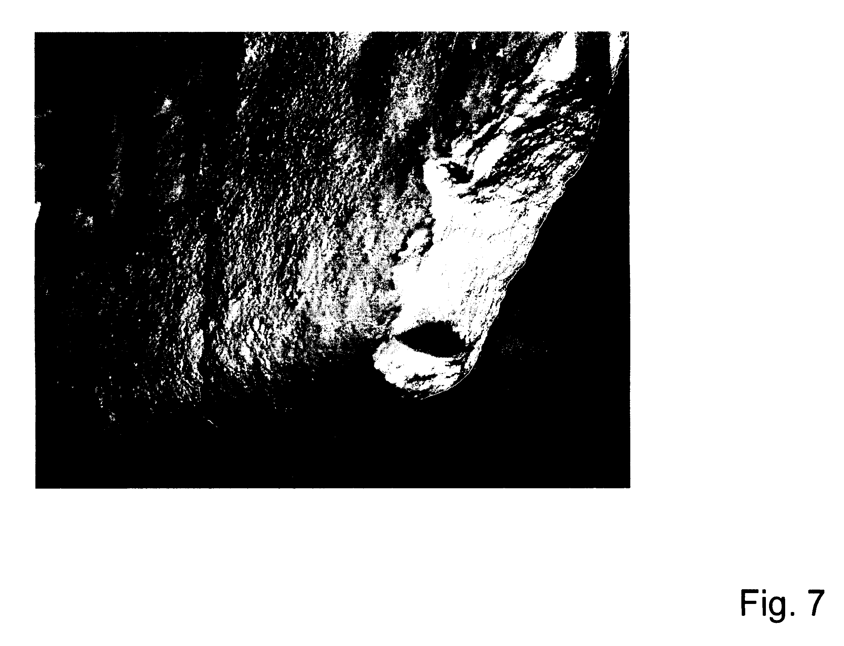

In Figur 7 ist eine Bruchfläche einer erfindungsgemäßen Platte zu sehen. Die Platte weist einen Schichtaufbau auf, wobei die Schichten derart miteinander verbunden sind beziehungsweise ineinander übergehen, daß der Bruch im wesentlichen gleichmäßig durch die Schichten verläuft, wobei am Übergang von der Randschicht zur Kernschicht beim Bruch eine Rissablenkung stattfindet. Auch das Gefüge der Schichten unterscheidet sich nicht sichtbar, was ein Vergleich des Randbereiches mit dem Kernbereich der Bruchfläche zeigt.

Die Erfindung ist nicht auf schlickergegossene Platten beschränkt. Ebensowenig ist die Verwendung von Sinterquarzgut als Ausgangsmaterial einschränkend zu verstehen. Es ist dem Fachmann ersichtlich, dass die Erfindung nicht auf die vorstehend beschriebenen Ausführungsbeispiele beschränkt ist, sondern vielmehr in vielfältiger Weise variiert werden kann. Insbesondere können die Merkmale der einzelnen Ausführungsbeispiele auch miteinander kombiniert werden.

### Bezugszeichenliste

- 1: Platte
- 2: Hauptausdehnungsfläche
- 3, 4: Stirnseite
- 5: versinterbare Masse
- 10: Körner
- 12, 120: Block
- 13, 130: Verbundkörper
- 20: Quarzglas
- 30: Kristalle
- L: Länge der Platte
- B: Breite der Platte
- D: Dicke der Platte

## Patentansprüche

1. Verfahren zum Herstellen eines Verbundkörpers (13, 130) mit Schichtaufbau, umfassend folgende Schritte:
a) Bereitstellen von zumindest zwei Platten (1), welche jeweils mindestens eine Hauptausdehnungsfläche (2) aufweisen,
b) Stapeln der Platten derart, daß eine Hauptausdehnungsfläche einer Platte einer Hauptausdehnungsfläche der im Stapel folgenden Platte im wesentlichen gegenüberliegt,
c) Verbinden der gestapelten Platten zu einem Block (12, 120) unter Einsatz einer versinterbaren Masse (5),
d) Durchführen einer Temperaturbehandlung an dem Block (12, 120), so daß zumindest ein Sintern der versinterbaren Masse (5) erfolgt und aus dem Block (12, 120) ein im wesentlichen fester Verbundkörper (13, 130) entsteht.

2. Verfahren nach Anspruch 1,
**dadurch gekennzeichnet, daß**
in Schritt c) die versinterbare Masse (5) zur Verbindung der Platten (1) in einen Zwischenraum zwischen zwei im Stapel aufeinander folgenden Platten eingebracht wird.

3. Verfahren nach Anspruch 1 oder 2,
**dadurch gekennzeichnet, daß**
in Schritt c) die versinterbare Masse (5) zur Verbindung der Platten (1) zumindest auf eine Seite des Stapels der Platten, an welche Platten mit einer Stirnseite (3, 4) stoßen, aufgebracht wird.

4. Verfahren nach einem der vorangegangenen Ansprüche,
**dadurch gekennzeichnet, daß**
der Block (12, 120) in Schritt d) gebrannt wird.

5. Verfahren nach einem der vorangegangenen Ansprüche,
**dadurch gekennzeichnet, daß**
der Block (12, 120) bei Temperaturen im Bereich von oberhalb von 1000°C, insbesondere im Bereich von 1050°C bis 1285°C, gebrannt wird.

6. Verfahren nach einem der vorangegangenen Ansprüche,
**dadurch gekennzeichnet, daß**
Schritt d) im Einsatz des Blockes (12, 120) erfolgt, wobei der Block im Einsatz zumindest einen Teil einer Vorrichtung bildet, welche bei ihrer bestimmungsgemäßen Nutzung Temperaturen oberhalb von 1000°C, insbesondere oberhalb von 1200°C annimmt.

7. Verfahren nach einem der vorangegangenen Ansprüche,
**dadurch gekennzeichnet, daß**
die Platten (1) selbst nach einem Verfahren mit den Schritten:
aa) Bereitstellen von Quarzglas in Form von im wesentlichen amorphen SiO₂-Körnern, von denen maximal 5 %, bevorzugt maximal 3 %, besonders bevorzugt maximal 2 % einen Durchmesser größer als 15 mm, bevorzugt größer als 10 mm, besonders bevorzugt größer als 6 mm aufweisen,
bb) Zugabe von Wasser zu den Quarzglaskörnern zum Herstellen einer Schlickermasse,
cc) Gießen der Schlickermasse in eine Form, die einen Hohlkörper mit der inversen Gestalt der herzustellenden Platte umfaßt,
dd) Trocknen der Schlickermasse zu einer Platte, hergestellt werden.

8. Verfahren nach Anspruch 7,
**dadurch gekennzeichnet, daß**
die Platten (1) einem Schritt
ee) Vorsintern bei einer Temperatur im Bereich zwischen 500°C und 700°C
unterzogen werden.

9. Verfahren nach einem der Ansprüche 7 oder 8,
**dadurch gekennzeichnet, daß**
die Platten (1) nach Schritt cc) und/oder nach Schritt dd) und/oder nach Schritt ee) einem Schritt ff) Sintern
unterzogen werden.

10. Verfahren nach Anspruch 9,
**dadurch gekennzeichnet, daß**
das Sintern in Schritt ff) bei einer Sintertemperatur erfolgt, bei welcher zumindest ein Teil des Quarzglases von der amorphen in eine kristalline Modifikation, insbesondere in beta-Cristobalit, umgewandelt wird,

11. Verfahren nach einem der Ansprüche 7 bis 10,
**dadurch gekennzeichnet, daß**
das Sintern in Schritt ff) bei einer Temperatur von mindestens 1080°C, vorzugsweise von mindestens 1120°C, bevorzugt von mindestens 1140°C, besonders bevorzugt von mindestens 1180 °C durchgeführt wird.

12. Verfahren nach einem der Ansprüche 7 bis 11,
**dadurch gekennzeichnet, daß**
die maximale Temperatur beim Sintern in Schritt ff) 1285°C beträgt, insbesondere bei einer größten Wandstärke der Platte (1) von kleiner oder gleich 85 mm.

13. Verfahren nach einem der Ansprüche 7 bis 12,
**dadurch gekennzeichnet, daß**
die maximale Temperatur beim Sintern in Schritt ff) 1250°C beträgt, insbesondere bei einer größten Wandstärke der Platte (1) von mehr als 85 mm.

14. Verfahren nach einem der Ansprüche 7 bis 13,
**dadurch gekennzeichnet, daß**
die Platten (1) einem Schritt
gg) Abkühlen auf eine Temperatur unter 300°C, bevorzugt unter 270°C, derart, daß das gebildete kristalline SiO₂ seine Kristallstruktur ändert,
ausgesetzt werden.

15. Verfahren nach einem der Ansprüche 7 bis 14,
**dadurch gekennzeichnet, daß**
in Schritt aa) im wesentlichen reines Quarzglas in amorpher Form mit einem Gehalt von mindestens 99,0 Gew.-%, bevorzugt mindestens 99,5 Gew.-%, besonders bevorzugt mindestens 99,9 Gew.-% an SiO₂ eingesetzt wird.

16. Verfahren nach einem der Ansprüche 1 bis 15,
**dadurch gekennzeichnet, daß**
die Platten (1), insbesondere die Schlickermasse zur Herstellung der Platten, und die versinterbare Masse (5) zum Verbinden der gestapelten Platten zu einem Block (12, 120) eine im wesentlichen identische Zusammensetzung aufweisen.

17. Verfahren nach einem der Ansprüche 1 bis 16,
**dadurch gekennzeichnet, daß**
zumindest eine Platte (1), insbesondere die Schlickermasse (5) zur Herstellung der Platte, zumindest ein Metalloxid, insbesondere Eisen- und/oder Manganoxid, umfaßt.

18. Verbundkörper (13, 130), insbesondere herstellbar oder hergestellt mit einem Verfahren nach einem der Ansprüche 1 bis 17,
**dadurch gekennzeichnet, daß**
der Verbundkörper (13, 130) einen Schichtaufbau mit zumindest zwei an ihrer jeweiligen Hauptausdehnungsfläche (2) einander gegenüber positionierten Platten (1) umfaßt.

19. Verbundkörper (13, 130) nach Anspruch 18,
**dadurch gekennzeichnet, daß**
der Verbundkörper mehr als zwei, bevorzugt zwischen zwei und 10 Platten (1), umfaßt.

20. Verbundkörper (13, 130) nach einem der Ansprüche 18 oder 19,
**dadurch gekennzeichnet, daß**
zumindest eine Platte eine Dicke (D) zwischen 10 Millimetern und 100 Millimetern aufweist.

21. Verbundkörper (13, 130) nach einem der Ansprüche 17 bis 20,
**dadurch gekennzeichnet, daß**
der Verbundkörper eine Gesamtdicke von bis zu 1000 Millimetern, bevorzugt von bis zu 500 Millimetern, besonders bevorzugt von bis zu 400 Millimetern aufweist.

22. Verbundkörper (13, 130) nach einem der Ansprüche 17 bis 21,
**dadurch gekennzeichnet, daß**
zumindest eine Platte (1) ein Länge (L) von bis zu 2500 Millimetern, insbesondere von bis zu 600 Millimetern aufweist.

23. Verbundkörper (13, 130) nach einem der Ansprüche 17 bis 22,
**dadurch gekennzeichnet, daß**
zumindest eine Platte (1) eine Breite (B) von bis zu 2000 Millimetern, insbesondere von bis zu 600 Millimetern aufweist.

24. Verbundkörper (13, 130) nach einem der Ansprüche 17 bis 23,
**dadurch gekennzeichnet, daß**
zumindest eine Platte (1) Sinterquarzgut umfaßt.

25. Verbundkörper (13, 130) nach einem der Ansprüche 17 bis 24,
**dadurch gekennzeichnet, daß**
zumindest eine Platte (1) mindestens 99,0 mol.-%, bevorzugt mindestens 99,5 mol.-%, besonders bevorzugt mindestens 99,9 mol.-% an SiO₂ umfassen.

26. Verbundkörper (13, 130) nach einem der Ansprüche 17 bis 25,
**dadurch gekennzeichnet, daß**
zumindest eine Platte (1) zumindest ein Metalloxid umfaßt.

27. Verbundkörper (13, 130) nach einem der Ansprüche 17 bis 26,
**dadurch gekennzeichnet, daß**
die Platten (1) durch im wesentlichen reines Sinterquarzgut, welches insbesondere mindestens 99,0 mol.-%, bevorzugt mindestens 99,5 mol.-%, besonders bevorzugt mindestens 99,9 mol.-% an SiO₂ aufweist, miteinander verbunden sind.

28. Verbundkörper (13, 130) nach einem der Ansprüche 17 bis 27,
**dadurch gekennzeichnet, daß**
zumindest eine Platte (1) eine offene Porosität von mehr als 2,5 %, bevorzugt im Bereich zwischen 5 % und 25 %, besonders bevorzugt im Bereich zwischen 8 % und 12 % aufweist.

29. Verbundkörper (13, 130) nach einem der Ansprüche 17 bis 28,
**dadurch gekennzeichnet, daß**
die Platten (1) eine unterschiedliche offene Porosität aufweisen, wobei insbesondere die Kernplatten eine höhere offene Porosität aufweisen als die Randplatten des Verbundkörpers.

30. Verbundkörper (13, 130) nach einem der Ansprüche 17 bis 29,
**dadurch gekennzeichnet, daß**
zumindest eine Platte (1) eine konturierte Oberfläche, insbesondere mit einer Kontur in Wellenform und/oder mit Rechteck- und/oder Dreiecks- und/oder Trapez-förmigen Nuten, aufweist.

31. Verbundkörper (13, 130) nach einem der Ansprüche 17 bis 30,
**dadurch gekennzeichnet, daß**
der Verbundkörper durch die Ausbildung eines Schichtmaterials aus flächig miteinander verbundenen Platten (1) gegenüber einem Monolithen mit gleicher Zusammensetzung und gleicher Geometrie eine erhöhte Korrosionsbeständigkeit gegen Angriffe einer Glasschmelze aufweist.

32. Verwendung eines Verbundkörpers (13, 130) nach einem der Ansprüche 17 bis 31 zumindest als Teil eines Tiegels und/oder einer Schmelzwanne und/oder einer Läuterwanne und/oder einer Rohrleitung und/oder eines Rührers und/oder eines Ofens und/oder eines Aggregats zum Einsatz in Kontakt mit einer Schmelze zumindest eines Metalls und/oder Halbmetalls und/oder Halbleiters und/oder Glases.
